(19) **Europäisches Patentamt / European Patent Office / Office européen des brevets**

(11) **EP 4 006 491 B1**

(12) **FASCICULE DE BREVET EUROPÉEN**

(45) Date de publication et mention
de la délivrance du brevet:
**15.04.2026 Bulletin 2026/16**

(21) Numéro de dépôt: **21209684.6**

(22) Date de dépôt: **22.11.2021**

(51) Classification Internationale des Brevets (IPC):
***G01C 21/20*** *(2006.01)*

(52) Classification Coopérative des Brevets (CPC):
**G01C 21/20**

(54) **SYSTÈME D'AIDE À LA NAVIGATION D'UN PORTEUR À L'AIDE D'AMERS**

NAVIGATIONSHILFSSYSTEM FÜR EINEN FRACHTTRÄGER MITHILFE VON LANDMARKEN

NAVIGATION ASSISTANCE SYSTEM OF A LANDMARK ASSISTANCE CARRIER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2020 FR 2012299**

(43) Date de publication de la demande:
**01.06.2022 Bulletin 2022/22**

(73) Titulaire: **Safran Electronics & Defense**
**75015 Paris (FR)**

(72) Inventeurs:
• **ELIE, Philippe**
**77550 MOISSY-CRAMAYEL (FR)**
• **JARRAUD, Raphael**
**77550 MOISSY-CRAMAYEL (FR)**
• **BAURECHE, Thierry**
**77550 MOISSY-CRAMAYEL (FR)**

• **GROSHENS, Clément**
**77550 MOISSY-CRAMAYEL (FR)**
• **SOYER, Baptiste**
**77550 MOISSY-CRAMAYEL (FR)**
• **COPIN, Valentine**
**77550 MOISSY-CRAMAYEL (FR)**
• **NATY, Cécile**
**77550 MOISSY-CRAMAYEL (FR)**
• **CARON, Baptiste**
**77550 MOISSY-CRAMAYEL (FR)**
• **GHONIEM, Mahmoud**
**77550 MOISSY-CRAMAYEL (FR)**

(74) Mandataire: **Regimbeau**
**20, rue de Chazelles**
**75847 Paris Cedex 17 (FR)**

(56) Documents cités:
**WO-A1-2013/080183     CN-A- 110 501 736**

**Description**

## DOMAINE DE L'INVENTION

La présente invention concerne un système et un procédé d'aide à la navigation pour un porteur mobile, tel qu'un aéronef.

## ETAT DE LA TECHNIQUE

L'utilisation de systèmes de navigation inertielle, appelée système INS (« Inertial Navigation System » en terminologie anglo-saxonne) est aujourd'hui classique, notamment dans le domaine de la navigation aérienne et maritime. Des systèmes INS sont ainsi couramment installés dans des véhicules, tels que des aéronefs ou des navires. Les systèmes INS utilisent différents capteurs tels que des gyromètres et ou des accéléromètres. Ces capteurs fournissent des mesures (mesures de rotation, d'accélération, ...) dont une intégration permet de déterminer une attitude, une vitesse et une position d'un véhicule en cours de déplacement.

Ces capteurs sont cependant imparfaits et présentent des erreurs intrinsèques ou des biais de mesure susceptibles de varier au cours d'un déplacement. Ces capteurs sont par ailleurs sujets à des bruits de mesure. Une conséquence de ces imperfections est que les systèmes INS s'avèrent précis sur une courte durée, mais sont sujets, à plus long terme, à des dérives importantes.

Pour pallier ces dérives, certains systèmes INS sont couplés avec un système de positionnement par satellites de type GNSS (« Global Navigation Satellite System » en terminologie anglo-saxonne), appelé système GNSS par la suite, tel qu'un système GPS (« Global Positioning System » en terminologie anglo-saxonne), GLONASS (système de navigation satellitaire russe), Galileo (futur système de navigation satellitaire européen) ou Beidou (futur système de navigation satellitaire chinois). On obtient alors un système dit hybride GNSS/INS tel que décrit par exemple dans le document EP2245479.

Dans un système hybride GNSS/INS, les informations fournies par le système GNSS sont généralement utilisées pour recaler le système INS. Classiquement, ce recalage est réalisé au moyen d'un filtre de Kalman qui optimise les performances de navigation en estimant les erreurs respectives du système GNSS et du système INS.

On distingue alors deux types de couplage : le couplage lâche (« loosely coupling » en terminologie anglo-saxonne) et le couplage serré (« tightly coupling » en terminologie anglo-saxonne).

Dans le couplage lâche, en plus de recevoir des solutions de navigation (positions, vitesses) du système INS, le filtre de Kalman reçoit en entrée des solutions de navigation (positions, vitesses) fournies par le système GNSS.

Dans le couplage serré, le système GNSS fournit en entrée du filtre de Kalman des données brutes telles que des pseudo-distances ou des pseudo-vitesses à la place des solutions de navigation.

A l'heure actuelle, une majorité des systèmes de navigation hybrides GNSS/INS utilise un couplage lâche du fait de sa simplicité de mise en œuvre. D'autres systèmes, tel que celui décrit dans le document CN110501736, utilisent un couplage serré.

Cependant, pour pouvoir fournir une solution de navigation, un système GNSS doit capter des signaux d'au moins un nombre prédéterminé de satellites, dites satellites GNSS, égal en général à quatre. Dans certains milieux, tels que les milieux urbains, la réception des signaux satellites est perturbée, ce qui peut empêcher, au moins temporairement, le système GNSS de capter le nombre prédéterminé de satellites GNSS nécessaires à la détermination d'une solution de navigation. Ces perturbations sont notamment liées à des masquages des satellites GNSS, des multi-trajets et des interférences. Lorsqu'il rencontre de telles perturbations, un système GNSS peut être incapable de fournir une solution de navigation en entrée du filtre de Kalman. Sans aide du système GNSS, un système hybride GNSS/INS devient alors un simple système INS.

## EXPOSE DE L'INVENTION

Il est souhaitable de pallier ces inconvénients de l'état de la technique.

Il est à cet effet proposé, selon un premier aspect, un système d'aide à la navigation pour un porteur mobile, le système comprenant :

- un module de traitement de signaux configuré pour estimer une première distance entre le porteur et une entité externe au porteur, à l'aide de données issues de signaux radio émanant de l'entité externe,
- un module de traitement optique configuré pour estimer une deuxième distance entre le porteur et un amer, à l'aide de données issues de signaux lumineux émanant de l'amer,
- un module d'hybridation serrée configuré pour mettre en œuvre un couplage serré prenant en entrée la première distance et la deuxième distance, de sorte à produire une solution de navigation du porteur, et

- un module d'hybridation lâche configuré pour mettre en œuvre un couplage lâche prenant en entrée des données inertielles relatives au porteur et la solution de navigation du porteur

produite par le module d'hybridation serrée, de sorte à produire une solution de navigation secondaire du porteur.

Le module de traitement optique représente une source d'information en distance pour le module d'hybridation serrée, qui n'est pas sujette à des problèmes de multi-trajets. En conséquence, les performances générales du système sont améliorées en présence de tels problèmes de multi-trajets affectant les signaux radio reçus.

Par ailleurs, le fait que le module d'hybridation soit de type « serré », c'est-à-dire que le couplage qu'il met en œuvre est un couplage serré et non un couplage lâche, permet au système d'atteindre un niveau d'intégrité supérieur, en particulier un niveau d'intégrité requis dans le domaine du transport aérien.

En outre, la combinaison des modules d'hybridation « serrée » et « lâche » au sein du système selon le premier aspect a pour avantage de pallier des défauts d'un module d'hybridation lâche unique fonctionnant seul, tout en conservant une complexité inférieure à un module d'hybridation serrée traitant des données inertielles.

Le système peut également comprendre les caractéristiques optionnelles suivantes, prises seules ou combinées entre elles lorsque cela est techniquement faisable.

De préférence, le système comprend une caméra propre à acquérir une image montrant l'amer, et le module de traitement optique est configuré pour estimer la deuxième distance entre le porteur et l'amer à l'aide de l'image.

De préférence, le module de traitement optique est configuré pour :

- reconnaître une forme d'amer dans l'image, et déterminer un point dans l'image de la forme reconnue,
- associer le point avec une position d'amer exprimée dans un repère terrestre,
- calculer une position du porteur dans le repère terrestre à l'aide du point, de la position d'amer, de données d'attitude du porteur et d'une précédente position du porteur déterminée antérieurement,
- calculer la deuxième distance à partir de la position du porteur et de la position d'amer.

De préférence, le module de traitement optique est configuré pour projeter dans l'image différentes positions d'amer exprimées dans le repère terrestre, et la position d'amer associée au point est une position, parmi les différentes positions d'amer, dont la projection dans l'image est la plus proche du point.

De préférence, le module de traitement optique est configuré pour :

- déterminer une matrice de passage représentative d'un changement de repère entre le repère terrestre et un repère lié à la caméra, la matrice de passage minimisant une grandeur tenant compte d'un écart entre le point et une projection dans l'image de la position 3D de l'amer associé,
- calculer la position du porteur dans le repère terrestre à partir de la matrice de passage déterminée.

De préférence, le module de traitement optique est configuré pour :

- déterminer N points dans l'image, avec $N \geq 4$, chaque point étant un point d'une forme d'amer reconnue dans l'image,
- associer les N points avec respectivement N positions d'amer exprimées dans le repère terrestre,

dans lequel la grandeur minimisée est une somme de N écarts respectifs entre les N points et les N projections associées.

De préférence, le module de traitement est configuré pour :

- calculer une valeur initiale pour la matrice de passage à partir d'une attitude et d'une position du porteur estimées antérieurement,
- déterminer la matrice de passage à l'aide d'un algorithme d'optimisation initialisé avec la valeur initiale.

De préférence, le module de traitement optique est configuré pour estimer plusieurs deuxièmes distances entre le porteur et au moins un amer, et le module d'hybridation serrée est configuré pour mettre en œuvre un couplage serré prenant en entrée la première distance et chaque deuxième distance, de sorte à produire la solution de navigation du porteur.

De préférence, l'entité externe est une balise d'un réseau cellulaire, ou un satellite auquel cas la deuxième distance est une pseudodistance entre le porteur et le satellite.

Il est également proposé, selon un deuxième aspect, un procédé d'aide à la navigation pour un porteur mobile susceptible d'être mis en œuvre par le système selon le premier aspect. Ce procédé comprend des étapes de :

- estimation d'une première distance entre le porteur et une entité externe au porteur, à l'aide de données issues de signaux radios émanant de l'entité externe,

- estimation d'une deuxième distance entre le porteur et un amer, à l'aide de données issues de signaux lumineux émanant de l'amer,
- mise en œuvre d'un couplage serré prenant en entrée la première distance et la deuxième distance, de sorte à produire une solution de navigation du porteur,
- mise en œuvre d'un couplage lâche prenant en entrée des données inertielles relatives au porteur et la solution de navigation du porteur, de sorte à produire une solution de navigation secondaire du porteur.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 illustre de façon schématique un porteur mobile ainsi que des entités externes à ce porteur.

La figure 2 illustre de façon schématique un système d'aide à la navigation d'un porteur, selon un mode de réalisation.

La figure 3 représente un repère terrestre et un repère lié à un porteur mobile.

La figure 4 est un organigramme d'étapes d'un procédé d'aide à la navigation selon un mode de réalisation.

La figure 5 détaille un mode de réalisation d'une étape faisant partie du procédé de la figure 4.

Les figures 6, 7 et 8 montrent une image acquise par une caméra, avec des annotations supplémentaires représentatives de traitements mis en œuvre au cours du procédé dont l'organigramme est représenté en figure 4.

Sur l'ensemble des figures, les éléments similaires portent des références identiques.

## DESCRIPTION DETAILLEE DE L'INVENTION

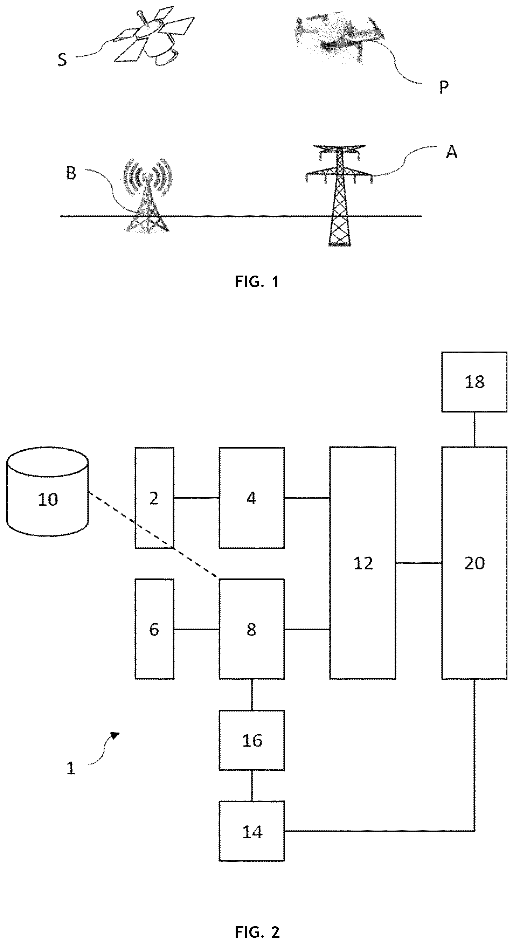

On a représenté en **figure 1** un porteur P mobile, un amer A, et diverses entités externes B, S adaptées pour communiquer par signaux radio avec le porteur mobile P.

L'amer A est un objet qui a une position fixe, et est susceptible d'être utilisé comme un point de repère du fait de sa forme caractéristique. A titre d'exemple non limitatif, un pylône électrique peut servir d'amer.

Une première entité externe est un satellite S de positionnement. Le satellite S fait partie d'une constellation de satellites d'un des types mentionnés en introduction.

Une deuxième entité externe est une balise B pour un réseau cellulaire, typiquement une balise d'un réseau 4G ou 5G. La balise est par exemple une station de base.

Le porteur P mobile peut être un aéronef (tel qu'un drone). En variante, le porteur P est un véhicule terrestre ou un navire.

En référence à la figure 2, le porteur P comprend un système d'aide à la navigation 1.

Le système d'aide à la navigation 1 comprend une interface 2 de communication radio pour recevoir des signaux émanant d'une des entités externes B, S précitées. L'interface 2 de communication radio comprend une ou plusieurs antennes. L'interface 2 de communication comprend en particulier un récepteur GNSS pour recevoir des signaux émis par le satellite S, et/ou un récepteur pour recevoir des signaux émis par la balise B.

Le système d'aide à la navigation 1 comprend par ailleurs un module de traitement de signaux 4. Comme son nom l'indique, le module de traitement de signaux 4 a pour fonction de traiter des données issues de signaux radio reçus par l'interface 2 de communication.

Le système d'aide à la navigation 1 comprend par ailleurs un dispositif d'acquisition 6 de signaux lumineux émanant d'un amer A externe au porteur P.

Le système d'aide à la navigation 1 comprend par ailleurs un module de traitement optique 8. Le module de traitement optique 8 a pour fonction générale de réaliser des traitements sur des données issues de signaux lumineux acquis par le dispositif d'acquisition.

Dans ce qui suit, il sera détaillé un mode de réalisation dans lequel le dispositif d'acquisition 6 est une caméra, et dans lequel le dispositif de traitement optique est en fait un dispositif de traitement d'image. Dans ce mode de réalisation, les données issues de signaux lumineux sont en fait les images acquises par la caméra.

La caméra 6 est propre à acquérir des images montrant l'environnement du porteur P mobile. L'amer A peut donc rentrer dans le champ de vision de la caméra 6, lorsque la caméra 6 est à proximité de l'amer A, et donc être visible dans une image acquise par la caméra 6.

La caméra 6 utilise des paramètres intrinsèques. Ces paramètres sont consignés dans une matrice de paramètres intrinsèques de la forme suivante :

$$K = \begin{bmatrix} fx & 0 & cx \\ 0 & fy & cy \\ 0 & 0 & 1 \end{bmatrix}$$

Où :

- $fx$ et $fy$ désignent respectivement les distances focales horizontale et verticale (en pixels) de la caméra 6
- $cx$ et $cy$ sont les coordonnées d'un point principal exprimées dans un repère local lié la caméra 6. Le point principal désigne le point d'intersection de l'axe optique de la caméra 6 avec le plan image.

Le module de traitement optique 8 est configuré pour mettre en œuvre notamment un traitement de reconnaissance de forme d'amer dans des images, lequel sollicite par exemple un réseau de neurones préalablement entraîné à reconnaître des formes prédéfinies d'amers.

Le module de traitement optique 8 a accès à une base d'amers 10 géoréférencés. Cette base d'amers 10 est stockée dans une mémoire. La mémoire stockant la base d'amers 10 fait partie d'un serveur externe au porteur P mobile, et apte à communiquer avec le porteur P mobile. Le module de traitement optique 8 peut accéder à la base d'amers 10 par l'intermédiaire de l'interface 2 de communication radio. En variante, la mémoire stockant la base d'amers 10 pourrait partie du système d'aide à la navigation 1, autrement dit être embarquée dans le porteur P mobile.

La base d'amers 10 comprend, pour un amer A donné, au moins une position d'un point de cet amer dans un repère terrestre, par exemple plusieurs positions (ce qui a tout particulièrement du sens lorsque l'amer A est volumineux, ce qui est le cas par exemple d'un pylône électrique). Chaque position se présente sous la forme d'un triplet de coordonnées ; il s'agit donc d'une position tridimensionnelle (3D). Par exemple, ces coordonnées sont celles du système WGS 84. Pour rappel, WGS 84 (World Geodetic System 1984) est un système géodésique mondial. Il est composé d'un système de coordonnées, d'un ellipsoïde de référence (l'ellipsoïde de révolution IAG GRS 80), et d'un géoïde (EGM96). Ce système géodésique mondial est notamment utilisé par le système de positionnement par satellite GPS.

Le système d'aide à la navigation 1 comprend par ailleurs un module d'hybridation serrée 12. Le module d'hybridation serrée 12 est configuré pour mettre en œuvre un couplage serré sur la base de données homogènes à des distances, qui sont fournies par le module de traitement de signaux 4, et le module de traitement optique 8, de sorte à produire une solution de navigation du porteur P.

Le module d'hybridation serrée 12 utilise typiquement un filtre de Kalman étendu (EKF). Un EKF est un filtre à réponse impulsionnelle infinie bien connu, qui estime l'état d'un système dynamique (ici la solution de navigation du porteur P) à partir d'observations. L'EKF utilisé par le module d'hybridation utilise comme observations les distances précitées.

Des modules d'hybridations serrée prenant en entrée des pseudo-distances sont déjà connus de l'homme du métier. Le module d'hybridation serrée 12 se distingue de ces modules connus en ce qu'il prend en entrée une plus grande variété de données homogènes à des distances, toutes choses égales par ailleurs. Comme on le verra dans la suite, le module d'hybridation serrée 12 prend en particulier en entrée des distances porteur-amer fournies par le module de traitement optique 8, ce qui n'est pas le cas de modules d'hybridation serrés existants.

Le système d'aide à la navigation 1 comprend par ailleurs une centrale inertielle 14 (« Inertial Measurement Unit » en anglais, abrégé en UMI). La centrale inertielle 14 est configurée pour produire des données inertielles relatives au porteur P mobile. La centrale inertielle 14 est conventionnelle ; elle comprend typiquement des accéléromètres et des gyromètres.

Le système d'aide à la navigation 1 comprend par ailleurs un système 14 de référence d'attitude et de cap (« Attitude and Heading Reference System », abrégé en AHRS). L'AHRS 16 est configuré pour produire des données d'attitude représentatives d'une orientation du porteur P dans l'espace, à partir de données inertielles (gyrométriques et/ou accélérométriques) fournies par la centrale inertielle 14. Ces données d'attitude comprennent typiquement un roulis, un tangage et un cap. L'AHRS 16 fournit les données d'attitude au module de traitement optique 8.

L'AHRS 16 peut le cas échéant comprendre ou être couplée à un magnétomètre ou à un gyrocompas, de sorte à rendre l'AHRS 16 gyrocompassant.

Le système d'aide à la navigation 1 peut également comprendre un odomètre 18 configuré pour estimer une vitesse du porteur P.

Le système d'aide à la navigation 1 comprend par ailleurs un module d'hybridation lâche 20. Le module d'hybridation lâche 20 est configuré pour mettre en œuvre un couplage lâche prenant en entrée la solution de navigation du porteur P produite par le module d'hybridation serrée 12, et des données inertielles relatives au porteur P, fournies par la centrale inertielle 14. Le couplage lâche peut également prendre en entrée une vitesse déterminée par l'odomètre.

Le module d'hybridation lâche 20 utilise typiquement un second filtre de Kalman étendu. L'EKF utilisé par le module d'hybridation lâche 20 utilise comme observations une solution de navigation élaborée par le module d'hybridation serrée 12, et les données inertielles.

Le module de traitement de signaux 4, le module de traitement optique 8, le module d'hybridation serrée 12 et le module d'hybridation lâche 20 peuvent être des circuits électroniques ou des parties d'un même circuit électronique (microcontrôleur, DS, FPGA, ASIC ou autre). En variante, ces modules peuvent être des programmes d'ordinateur ou former différentes parties d'un programme d'ordinateur comprenant des instructions de code pour réaliser les fonctions précitées, lorsque ces instructions de code sont exécutées par un ou plusieurs processeurs du porteur P mobile. Ces programmes sont stockés dans une ou plusieurs mémoires.

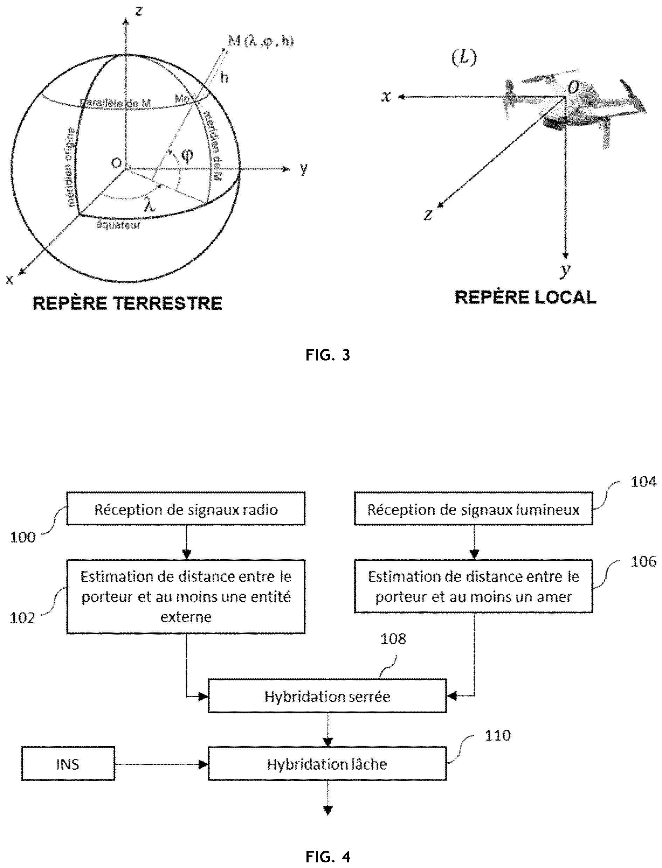

Comme l'illustre la figure 3, le repère terrestre dans lequel sont définies les positions d'amer stockées dans la base d'amers 10 est différent du repère local lié à la caméra. Le repère terrestre est un repère lié à la terre. Le repère terrestre a pour origine le centre de la terre, et l'un de ses trois axes est tourné vers le Nord.

On peut passer d'un des deux repères à l'autre par une transformation comprenant une translation et une rotation. Une telle transformation s'exprime sous la forme d'une matrice de passage [R|t] comprenant une matrice de rotation R (dimensions 3x3) et une matrice t de translation (dimensions 3x1). La notation [R|t] correspond à la concaténation horizontale des matrices R et t.

La matrice de passage [R|t] peut s'exprimer en fonction :

- de coordonnées dans le repère terrestre (typiquement les coordonnées ($\phi$, $\lambda$, $ht$) de la norme WGS84) et
- de données d'attitude du porteur P ($\alpha cap$, $\alpha tng$, $\alpha rls$) sous l'hypothèse que les attitudes sont données en convention « North East Down ».

Dans la suite, on utilise les conventions de nommage suivantes :

- $[R|t]_{(L)\to(T)}$ : matrice de passage du repère local vers le repère terrestre
- $R_{(L)\to(T)}$ : composante en rotation de $[R|t]_{(L)\to(T)}$
- $t_{(L)\to(T)}$ : composante en translation de $[R|t]_{(L)\to(T)}$

Et inversement :

- $[R|t]_{(T)\to(L)}$ : matrice de passage du repère terrestre vers le repère local
- $R_{(T)\to(L)}$ : composante en rotation de $[R|t]_{(T)\to(L)}$
- $t_{(T)\to(L)}$ : composante en translation de $[R|t]_{(T)\to(L)}$

Par convention, le signe prime désigne une transposée.

S'agissant de la rotation R, on a :

$$R_{(T)\to(L)} = R_{pos} \cdot R_{UEN\to NED} \cdot R_{att} \cdot R_{NED\to EDN}$$

$$R_{(L)\to(T)} = R'_{(T)\to(L)}$$

avec : $R_{pos} = R_z(\lambda) \cdot R_y(-\phi)$, $R_{att} = R_z(\alpha cap) \cdot R_y(\alpha tng) \cdot R_x(\alpha rls)$ ; par ailleurs, $R_{UEN\to NED}$ est la matrice de changement de repère du référentiel UEN vers le référentiel NED, avec U : Up, E : East, N : North, D : Down. On a donc :

$$R_{UEN\to NED} = \begin{bmatrix} 0 & 0 & -1 \\ 0 & 1 & 0 \\ 1 & 0 & 0 \end{bmatrix}$$

$$R_{NED\to EDN} = \begin{bmatrix} 0 & 0 & 1 \\ 1 & 0 & 0 \\ 0 & 1 & 0 \end{bmatrix}$$

S'agissant de translation t, on a :

$$t_{(T) \rightarrow (L)} = \begin{cases} x = (r + ht)\cos(\phi)\cos(\lambda) \\ y = (r + ht)\cos(\phi)\sin(\lambda) \\ z = (r(1 - e^2) + ht)\sin(\phi) \end{cases}$$

$$t_{(L) \rightarrow (T)} = -R'_{(T) \rightarrow (L)} t_{(T) \rightarrow (L)}$$

*Avec :* $r = a/\sqrt{1 - e^2(sin(\phi))^2}$, $f = 1/298,257223563$, $e = \sqrt{1 - (1 - f)^2}$, $a = 6378137,0$ m (demi-grand axe de l'ellipsoïde associée au référentiel WGS84).

Sauf indication contraire, la notation [R|t] utilisée dans la suite désignera implicitement la matrice de passage $[R|t]_{(L) \rightarrow (T)}$.

En référence à la figure 4, un procédé mis en œuvre par le système d'aide à la navigation 1 comprend les étapes suivantes.

L'interface 2 de communication reçoit des signaux radio émanant d'au moins une des entités externes S, B discutées précédemment en relation avec la figure 1 (étape 100).

Le module de traitement de signaux 4 configuré estime au moins une distance entre le porteur P et une entité externe au porteur P, à l'aide des signaux radio reçus (étape 102).

Une distance d'un premier type calculée au cours de l'étape 102 est par exemple une pseudo-distance entre le porteur P et le satellite S de positionnement. Le calcul d'une telle pseudo-distance est bien connu de l'état de la technique.

Une distance d'un second type calculée au cours de l'étape 102 peut être une distance entre le porteur P et la balise B. Un tel calcul est connu de l'homme du métier.

Bien entendu, le module de traitement de signaux peut n'estimer que des distances du premier type, que des distances du deuxième type, ou bien des distances de ces deux types. Par ailleurs, le module de traitement de signaux peut estimer une seule distance d'un type donné, ou bien plusieurs.

Quel que soit le nombre ou le type de distance estimée par le module de traitement de signaux 4 à l'étape 102, chaque distance calculée est fournie au module d'hybridation serrée 12.

Par ailleurs, le dispositif d'acquisition 6 acquiert des données issues de signaux lumineux (étape 104). Plus précisément, la caméra 6 acquiert une image montrant un environnement du porteur P mobile.

Le module de traitement optique 8 estime au moins une distance entre le porteur P et un amer A montré dans l'image acquise (étape 106). Un mode de réalisation de l'étape 106 sera détaillé plus loin. Soit N le nombre de distances estimée lors de l'étape 106.

Chaque distance estimée par le module de traitement optique 8 est transmise au module d'hybridation serrée 12.

Le module d'hybridation serrée 12 met en œuvre un couplage serré prenant en entrée les distances calculées aux étapes 102 et 106, de sorte à produire une solution de navigation primaire du porteur P (108). La solution de navigation peut être de la forme classique PVT (Positionnement, Vitesse, Temps). A minima, la solution de navigation est de la forme P (Positionnement).

Comme indiqué précédemment, le couplage serré mis en œuvre est conforme à des couplages serrés connus, à ceci près qu'il utilise comme observation non conventionnelle au moins une distance entre le porteur P et au moins un amer A, fournie par le module de traitement optique 8, et éventuellement une distance entre le porteur et une balise de réseau cellulaire. Ces distances sont traitées comme le sont des pseudo-distances dans les couplages serrés existants.

Le module d'hybridation serrée 12 peut, dans un mode de réalisation, utiliser dans le couplage serré une distance d'un type donné seulement si une distance d'un autre type n'est pas disponible ou défaillante. Par exemple, le module d'hybridation peut utiliser une distance porteur-amer fournie par le module de traitement d'image à condition que le module de traitement de signaux n'ait pas été capable de fournir de distance du premier type (pseudo-distance porteur-satellite) ou du second type (distance porteur-balise).

Le module d'hybridation serrée 12 peut mettre en œuvre une mise en cohérence des informations qu'il traite, afin d'augmenter l'intégrité.

Comme indiqué précédemment, le module d'hybridation serrée peut utiliser un filtre de Kalman étendu (EKF) pour réaliser le couplage serré. L'EFK est défini par les équations suivantes :

$$X = F.X + Q$$

$$Z = H.X + R$$

Où :

- X est un vecteur d'état du porteur comprenant diverses variables,
- Q représente un bruit qui entache le vecteur d'état X.
- F est une matrice de transition (on parle également dans la littérature de matrice de prédiction).
- Z est un vecteur d'observations contenant les distances fournies par les modules de traitement 4 et 8,
- R est une matrice représentative d'une erreur d'observations (à ne pas confondre toutefois avec la matrice de rotation R discutée précédemment). Cette matrice est typiquement une matrice diagonale composée d'un terme uniforme pour toutes les distances porteur-amer fournies par le module de traitement optique 8, s'il en existe plusieurs. Ce terme uniforme prend compte en particulier :

   ◦ Une incertitude de la visée optique/porteur, liée à la façon dont la caméra 6 est montée sur le porteur,
   ◦ Une incertitude pixellique de la caméra, liée à la taille des pixels de la caméra,
   ◦ Une erreur de positionnement d'un amer lors de son relevé topographique, pouvant être négligée.

- H est une matrice d'observation. Cette matrice H comprenant notamment N lignes supplémentaires associées aux distances porteur-amer fournies par le module de traitement optique 8. Ces N lignes peuvent ne comprendre que des 1 et des 0 et sont facilement déterminables en fonction des variables du vecteur d'état X.

Le module d'hybridation lâche 20 met en œuvre un couplage lâche prenant en entrée la solution de navigation du porteur P produite par le module d'hybridation serrée 12, et des données inertielles relatives au porteur P, de sorte à obtenir une solution de navigation secondaire du porteur P (étape 110).

De préférence, le couplage lâche 100 n'est mis en œuvre que si le module d'hybridation vérifie une condition prédéterminée, qui garantit que la solution de navigation secondaire sera plus précise que la solution primaire. Cette condition dépend en pratique d'une innovation de l'EKF mis en œuvre par le module d'hybridation lâche 20. A défaut de pouvoir fournir une telle garantie, le coupage lâche n'est pas mis en œuvre.

Les étapes qui précèdent sont répétées dans le temps, de sorte à mettre à jour la ou les solutions de navigation élaborées.

On remarque que les données inertielles (Position et Vitesse) fournies par la centrale inertielle 14 ne font pas l'objet d'un couplage serré dans le système 1 proposé, mais n'interviennent que dans un second temps dans un couplage lâche se fondant sur le résultat du couplage serré. Cette architecture en deux étages est avantageuse comparativement à une architecture à un seul étage de couplage serré qui ferait intervenir les données inertielles, car nécessite une charge de calcul moindre, et donc permet l'utilisation de composants de taille plus réduite à performances égales.

Dit encore d'une autre manière, cette architecture à deux étages pallie des défauts d'un module d'hybridation lâche unique fonctionnant seul, tout en conservant une complexité inférieure à un module d'hybridation serrée traitant des données inertielles.

Par ailleurs, le module de traitement optique 8 représente une source d'information en distance additionnelle pour le module d'hybridation serrée, qui n'est pas sujet à des problèmes de multi-trajets. En conséquence, les performances générales du système 1 sont améliorées en présence de tels problèmes de multi-trajets affectant les signaux radio reçus par l'interface 2 de communication.

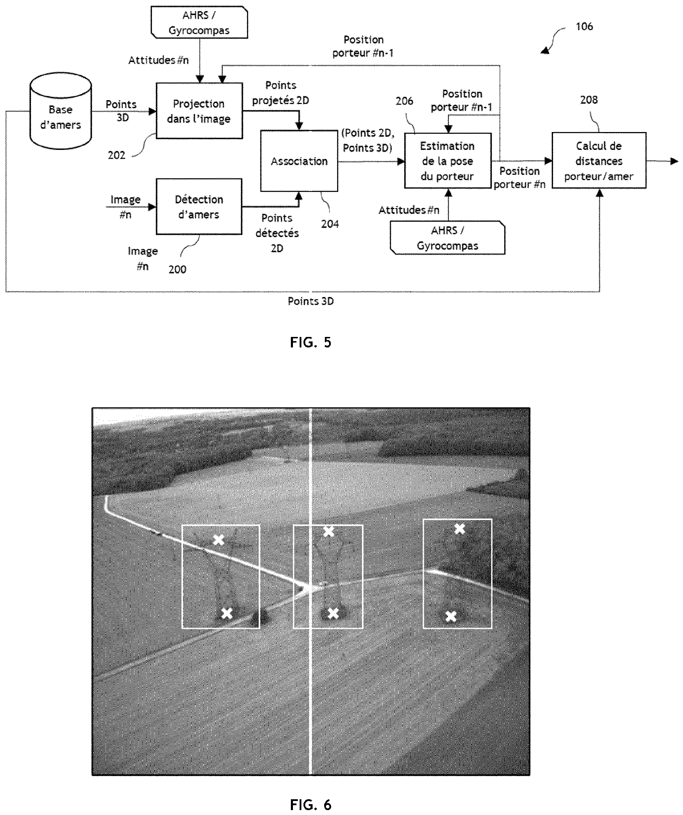

En référence à la **figure 5,** l'étape 106 d'estimation d'une distance entre le porteur P et un amer A, mise en œuvre par le module de traitement optique 8, comprend les sous-étapes suivantes dans un mode de réalisation.

Comme indiqué précédemment, l'étape 106 est répétée dans le temps. Il va être décrit à présent une itération k de l'étape 106. Par convention, une donnée affublée du suffixe #k est associée à l'itération k.

Une image #n montrant un environnement du porteur P mobile a été acquise à l'étape 104.

Le module de traitement optique 8 applique une reconnaissance de forme d'amer à l'image, de sorte à détecter, dans l'image, un ou plusieurs amers d'après leurs formes (étape 200). Pour chaque forme détectée dans l'image, le module de traitement détermine au moins un point de la forme. Le point est une donnée bidimensionnelle ayant une position propre dans l'image.

Soit N le nombre de points d'amer déterminés dans l'image. Le point déterminé d'indice i, i allant de 1 à N, est noté $(u_i, v_i)$ dans la suite.

L'étape 200 peut par exemple solliciter un réseau de neurones ayant été entraîné à reconnaître un ou plusieurs formes d'amer prédéterminées et certains de leurs points caractéristiques.

Dans l'exemple d'image montrée en **figure 6,** sont détectés trois amers. Ces amers sont des pylônes électriques, reconnus par le module de traitement optique 8 grâce à leur forme caractéristique (contenue chacune dans un rectangle). Dans cet exemple, le module de traitement optique 8 a déterminé, pour chaque forme d'amer reconnue, deux points caractéristiques de la forme d'amer (un point situé à la base du pylône et un autre point situé au sommet du pylône) ; on a donc N=6.

Dans ce qui suit, on suppose que le nombre de points déterminé par amer correspond au nombre de points qui se rapportent à un amer A dans la base d'amers 10.

Par ailleurs, l'AHRS 16 génère des données d'attitude #n, et les fournit au module de traitement optique 8.

On suppose également que le module de traitement optique 8 a connaissance d'une position #n-1 du porteur P dans le repère terrestre (au sens où cette position a été déterminée au cours d'une itération précédente de l'étape 106). Dans le cas particulier de la première itération de l'étape 106, la position #n-1 utilisée peut être initialisée à une valeur élaborée avec l'aide du récepteur GNSS de l'interface de communication 2.

Le module de traitement optique 8 accède à la base d'amers 10, et détermine un ou plusieurs amers référencés dans la base et montrés dans l'image. Pour réaliser cette détermination, le module de traitement optique 8 s'aide de la position du porteur P #n-1, ainsi que des données d'attitude #n, qui sont approximatives.

Plus précisément, le module de traitement estime une matrice de passage $[R|t]^0$ entre le repère terrestre (dans lequel les positions de la base d'amer sont exprimées), et un repère local lié à la caméra 6, à l'aide de la position du porteur P #n-1, ainsi que des données d'attitude #n.

Le module de traitement projette dans l'image une position d'amer référencée dans la base (position 3D), à l'aide de la matrice de passage estimée, ainsi que d'une matrice de paramètres intrinsèques de la caméra 6 pour réaliser la projection (étape 202). Le résultat de cette projection est un point dans l'image (position 2D). En raison du caractère approximatif de la position du porteur P #n-1 ainsi que des données d'attitude #n, le point dans l'image résultant de la projection occupe une position entachée d'erreur.

Le module de traitement optique 8 répète cette étape de projection 202 pour chaque point référencé dans la base d'amers 10 qui se rapporte à un amer A montré dans l'image (au plus N projections sont donc mises en œuvre).

De préférence, la projection est mise en œuvre seulement pour tout amer dont la position, dans la base d'amers 10, est incluse dans une boule de rayon prédéfini centrée sur la position #n-1 du porteur. Ceci permet de limiter la charge de calcul de projection à un sous-ensembles d'amers qui sont susceptibles d'être montrés dans l'image.

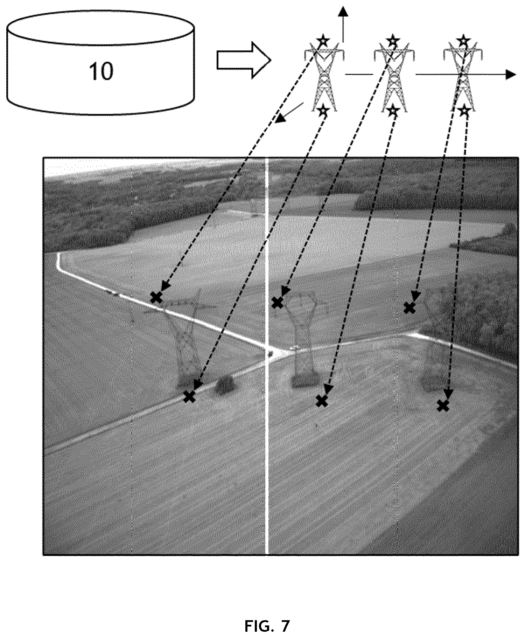

La **figure 7** montre les N points projetés dans l'image à partir de N positions d'amer référencées dans la base d'amers 10 (avec N=6).

Le module de traitement optique 8 associe un point déterminé dans une forme d'amer reconnue dans l'image lors de l'étape 200, avec un point d'amer référencé dans la base d'amers 10 (étape 204).

Cette association est réalisée selon un critère de plus courte distance dans l'image. Plus précisément, est associé à un point de référence déterminé par reconnaissance de forme le point d'amer dont la projection dans l'image est la plus proche du point de référence.

Cette étape d'association 204 est répétée pour chaque point déterminé lors de l'étape 200. Au plus N associations sont donc mises en œuvre.

Par convention, la position d'amer référencée dans la base d'amers 10 associée au point $(u_i, v_i)$ est noté $(X_i, Y_i, Z_i)$.

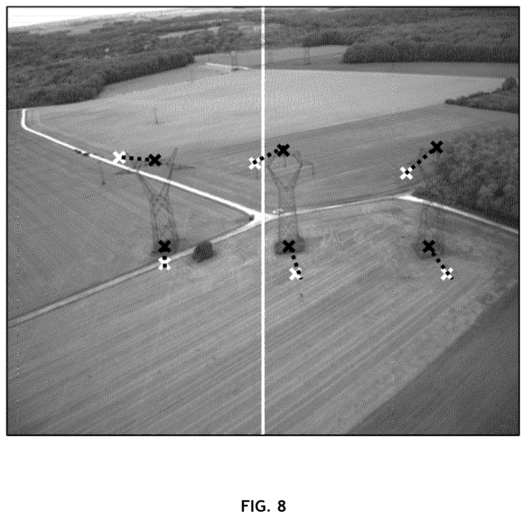

Dans l'exemple de la **figure 8,** ces associations sont représentées par des segments en pointillés reliant les points de formes d'amer reconnues avec les points résultants de projections. La longueur de chaque segment représente un écart entre un point déterminé par reconnaissance de forme d'amer et la projection du point d'amer qui lui est associée. Il existe donc au plus N écarts dans l'image.

A ce stade, le module de traitement optique 8 sait donc précisément où se trouve un amer A dont il a reconnu la forme dans une image.

On a vu précédemment qu'était utilisée au cours de l'étape de projection 202 une matrice de passage $[R|t]^0$ entre le repère terrestre et le repère local lié à la caméra 6, que le module de traitement optique 8 a déterminé à partir d'informations approximatives (données d'attitude #n et position du porteur #n-1).

Le module de traitement optique 8 met à profit les données associées au cours de l'étape 204 pour calculer une position #n du porteur P dans le repère terrestre, plus précise que la position #n-1 (étape 206).

Pour calculer cette position #n, le module de traitement optique 8 détermine une nouvelle matrice de passage $[R|t]$ représentative d'un changement de repère entre le repère terrestre et un repère lié à la caméra 6, plus précise que $[R|t]^0$.

En théorie, il serait désirable de trouver au cours de cette étape 206 une matrice de passage $[R|t]$ qui vérifie l'égalité suivante pour tout i allant de 1 à N, c'est à dire pour chaque association $\left\{ \begin{pmatrix} u_i \\ v_i \end{pmatrix}, \begin{pmatrix} X_i \\ Y_i \\ Z_i \end{pmatrix} \right\}$ réalisée :

$$s \begin{pmatrix} u_i \\ v_i \\ 1 \end{pmatrix} = K[R|t] \begin{pmatrix} X_i \\ Y_i \\ Z_i \\ 1 \end{pmatrix}$$

où :

- K désigne la matrice de paramètres intrinsèques de la caméra 6.

- s désigne un coefficient de normalisation.

En pratique, le module de traitement met en œuvre lors de l'étape 206 un algorithme d'optimisation cherchant une matrice de passage [R|t] qui vérifie une certaine contrainte, de sorte à obtenir une matrice proche de la matrice idéale décrite ci-dessus. Cette contrainte consiste à minimiser une grandeur tenant compte d'au moins un écart (représenté par un segment sur la **figure 8**) entre un point déterminé par reconnaissance de forme et la projection associée.

Plus précisément, cette grandeur est la somme de N écarts respectifs entre les N points et les N projections qui leur sont respectivement associées, avec $N \geq 4$.

Les N points utilisés sont dispersés de sorte à respecte des contraintes de dispersion dans trois directions de l'espace prédéfinies (dispersion en profondeur, en hauteur et latérale).L'estimation par optimisation mise en œuvre par le module de traitement lors de l'étape 206 est par exemple la suivante :

$$[R|t] = argmin_{R,t} \sum_i \rho \left( \left\| K \left( R \begin{pmatrix} X_i \\ Y_i \\ Z_i \end{pmatrix} + t \right) - \begin{pmatrix} u_i \\ v_i \\ 1 \end{pmatrix} \right\|_2 \right)$$

Dans cette équation, $\rho$ désigne une fonction de coût. Cette fonction peut être par exemple la fonction carré, ou alors la fonction de Huber, définie comme suit :

$$\rho : x \mapsto \begin{cases} \dfrac{1}{2} x^2 \ si \ |x| \leq \delta \\ \delta \left( |x| - \dfrac{1}{2} \delta \right) \ sinon \end{cases}$$

L'algorithme d'optimisation est initialisé avec une valeur initiale pour la matrice de passage, avant d'arriver à la matrice estimée qui minimise la grandeur discutée précédemment. Avantageusement, la valeur initiale est $[R|t]^0$, qui est la matrice calculée au cours de l'étape de reprojection. Utiliser cette valeur initiale est avantageux, car même si celle-ci se fonde sur des informations approximatives (données d'attitude #n et position du porteur P #n-1), ces informations demeurent des informations très récentes, donc pertinentes. En conséquence, l'algorithme d'optimisation converge plus rapidement vers une matrice minimisant la grandeur discutée précédemment, lorsqu'il est initialisé avec $[R|t]^0$.

Le module de traitement calcule ensuite la position #n du porteur P dans le repère terrestre à l'aide de la matrice de passage estimée. La position #n du porteur P, se présentant comme un triplet de coordonnées (X, Y, Z) dans le repère terrestre, est calculée comme suit :

$$(X, Y, Z) = -R't$$

où R' désigne la transposée de R.

Ensuite, le module de traitement optique 8 calcule une distance $d_i$ entre le porteur P et un amer A montré dans l'image, à partir de la position #n du porteur P (X, Y, Z), et une position de d'amer ($X_i$, $Y_i$, $Z_i$) référencée dans la base d'amers 10, ayant été associée au point ($u_i$, $v_i$) d'indice i (étape 208). On a :

$$d_i = \sqrt{(X - X_i)^2 + (Y - Y_i)^2 + (Z - Z_i)^2}$$

L'étape 208 de calcul de distance est répétée pour tout i allant de 1 à N, de sorte à produire le cas échéant plusieurs distances porteur-amer. Ce sont ces distances qui sont ensuite utilisées par le module d'hybridation serrée 12 au cours de l'étape 108.

Les étapes 200 à 208 sont répétées dans des itérations suivantes de l'estimation 106. En particulier, la position du porteur P #n est utilisée au cours des étapes 202 et 206 de l'itération n+1.

Il a été décrit ci-dessus un mode de réalisation dans lequel le dispositif d'acquisition de signaux lumineux est une caméra, et dans lequel le module de traitement optique est un module de traitement d'images acquises par la caméra.

Dans un autre mode de réalisation, la caméra et le module de traitement d'image peuvent être remplacé par un LIDAR. Le LIDAR est capable d'estimer la distance qui sépare le porteur P d'un amer en se fondant également sur des signaux lumineux, mais selon une stratégie différente (à partir d'un délai entre l'émission d'une impulsion laser vers l'amer A et la réception ultérieure d'impulsion retour faisant écho à l'impulsion laser). Toutefois, le mode de réalisation à base de caméra présente de nombreux avantages par rapport à celui utilisant un LIDAR : il est moins coûteux, moins encombrant, moins consommateur d'énergie, moins sensible aux conditions atmosphériques, est surtout indétectable (alors que le LIDAR est un moyen actif utilisant un émetteur, donc détectable).

**Revendications**

1. Système (1) d'aide à la navigation pour un porteur (P) mobile, le système comprenant :

    - un module de traitement de signaux (4) configuré pour estimer une première distance entre le porteur (P) et une entité externe (S, B) au porteur (P), à l'aide de données issues de signaux radio émanant de l'entité externe (S, B),
    - un module de traitement optique (8) configuré pour estimer une deuxième distance entre le porteur (P) et un amer (A), à l'aide de données issues de signaux lumineux émanant de l'amer (A),
    - un module d'hybridation serrée (12) configuré pour mettre en œuvre un couplage serré prenant en entrée la première distance et la deuxième distance, de sorte à produire une solution de navigation du porteur (P),

    le système étant **caractérisé en ce qu'**il comprend :

    - un module d'hybridation lâche (20) configuré pour mettre en œuvre un couplage lâche prenant en entrée des données inertielles relatives au porteur (P) et la solution de navigation du porteur (P) produite par le module d'hybridation serrée (12), de sorte à produire une solution de navigation secondaire du porteur (P).

2. Système (1) selon la revendication précédente, comprenant une caméra propre à acquérir une image montrant l'amer, et dans lequel le module de traitement optique (8) est configuré pour estimer la deuxième distance entre le porteur (P) et l'amer (A) à l'aide de l'image.

3. Système (1) selon la revendication précédente, dans lequel le module de traitement optique (8) est configuré pour :

    - reconnaître une forme d'amer dans l'image, et déterminer un point dans l'image de la forme reconnue,
    - associer le point avec une position d'amer exprimée dans un repère terrestre,
    - calculer une position du porteur (P) dans le repère terrestre à l'aide du point, de la position d'amer, de données d'attitude du porteur et d'une précédente position du porteur déterminée antérieurement,
    - calculer la deuxième distance à partir de la position du porteur (P) et de la position d'amer.

4. Système (1) selon la revendication précédente, dans lequel :

    - le module de traitement optique (8) est configuré pour projeter dans l'image différentes positions d'amer exprimées dans le repère terrestre,
    - la position d'amer associée au point est une position, parmi les différentes positions d'amer, dont la projection dans l'image est la plus proche du point.

5. Système (1) selon l'une des revendications 3 et 4, dans lequel le module de traitement optique (8) est configuré pour :

    - déterminer une matrice de passage représentative d'un changement de repère entre le repère terrestre et un repère lié à la caméra, la matrice de passage minimisant une grandeur tenant compte d'un écart entre le point et une projection dans l'image de la position d'amer (A) associée,
    - calculer la position du porteur (P) dans le repère terrestre à partir de la matrice de passage déterminée.

6. Système (1) selon la revendication précédente, dans lequel le module de traitement optique (8) est configuré pour :

    - déterminer N points dans l'image, avec N≥4, chaque point étant un point d'une forme d'amer reconnue dans l'image,
    - associer les N points avec respectivement N positions d'amer exprimées dans le repère terrestre,

    dans lequel la grandeur minimisée est une somme de N écarts respectifs entre les N points et les N projections associées.

7. Système (1) selon l'une des revendications 5 et 6, dans lequel le module de traitement est configuré pour :

    - calculer une valeur initiale pour la matrice de passage à partir d'une attitude et d'une position du porteur (P) estimées antérieurement,
- déterminer la matrice de passage à l'aide d'un algorithme d'optimisation initialisé avec la valeur initiale.

8. Système (1) selon l'une des revendications précédentes, dans lequel :

- le module de traitement optique (8) est configuré pour estimer plusieurs deuxièmes distances entre le porteur (P) et au moins un amer,
- le module d'hybridation serrée (12) est configuré pour mettre en œuvre un couplage serré prenant en entrée la première distance et chaque deuxième distance, de sorte à produire la solution de navigation du porteur (P).

9. Système (1) selon l'une des revendications 1 à 8, dans lequel l'entité externe est une balise (B) d'un réseau cellulaire.

10. Système (1) selon l'une des revendications 1 à 8, dans lequel l'entité externe est un satellite (S).

11. Système (1) selon la revendication précédente, dans lequel la deuxième distance est une pseudo-distance entre le porteur (P) et le satellite.

12. Procédé d'aide à la navigation pour un porteur (P) mobile, comprenant des étapes de

- estimation (102) d'une première distance entre le porteur (P) et une entité externe (B, S) au porteur (P), à l'aide de données issues de signaux radios émanant de l'entité externe,
- estimation (106) d'une deuxième distance entre le porteur (P) et un amer (A), à l'aide de données issues de signaux lumineux émanant de l'amer (A),
- mise en œuvre (108) d'un couplage serré prenant en entrée la première distance et la deuxième distance, de sorte à produire une solution de navigation du porteur (P),

le procédé étant **caractérisé en ce qu'**il comprend une étape de :

- mise en œuvre (110) d'un couplage lâche prenant en entrée des données inertielles relatives au porteur (P) et la solution de navigation du porteur (P), de sorte à produire une solution de navigation secondaire du porteur (P).

**Patentansprüche**

1. Navigationshilfssystem (1) für einen mobilen Frachtträger (P), wobei das System umfasst:

- ein Signalverarbeitungsmodul (4), das zum Schätzen eines ersten Abstands zwischen dem Frachtträger (P) und einer zum Frachtträger (P) externen Einheit (S, B) anhand von Daten aus Funksignalen, die von der externen Einheit (S, B) ausgehen, ausgelegt ist,
- ein optisches Verarbeitungsmodul (8), das zum Schätzen eines zweiten Abstands zwischen dem Frachtträger (P) und einer Landmarke (A) anhand von Daten aus Lichtsignalen, die von der Landmarke (A) ausgehen, ausgelegt ist,
- ein Modul zur engen Hybridisierung (12), das zur Durchführung einer engen Kopplung unter Verwendung des ersten Abstands und des zweiten Abstands als Eingabe ausgelegt ist, so dass eine Navigationslösung für den Frachtträger (P) erzeugt wird,

wobei das System **dadurch gekennzeichnet ist, dass** es umfasst:

- ein Modul (20) zur losen Hybridisierung, das zur Durchführung einer losen Kopplung unter Verwendung der Trägheitsdaten bezüglich des Frachtträgers (P) und der vom Modul (12) zur engen Hybridisierung erzeugten Navigationslösung des Frachtträgers (P) als Eingabe ausgelegt ist, so dass eine sekundäre Navigationslösung des Frachtträgers (P) erzeugt wird.

2. System (1) nach vorstehendem Anspruch, umfassend eine Kamera, die imstande ist, ein Bild zu erfassen, das die Landmarke zeigt, und wobei das optische Verarbeitungsmodul (8) zum Schätzen des zweiten Abstands zwischen dem Frachtträger (P) und der Landmarke (A) anhand des Bildes ausgelegt ist.

3. System (1) nach vorstehendem Anspruch, wobei das optische Verarbeitungsmodul (8) ausgelegt ist, um:

- eine Form einer Landmarke im Bild zu erkennen und einen Punkt im Bild der erkannten Form zu bestimmen,
- den Punkt einer Landmarkenposition in einem terrestrischen Koordinatensystem zuzuordnen,
- eine Position des Frachtträgers (P) im terrestrischen Koordinatensystem anhand des Punktes, der Position der Landemarke, von Lagedaten des Frachtträgers sowie einer zuvor bestimmten vorherigen Position des Frachtträgers zu berechnen,
- den zweiten Abstand aus der Position des Frachtträgers (P) und der Position der Landemarke zu berechnen.

4. System (1) nach vorstehendem Anspruch, wobei:

- das optische Verarbeitungsmodul (8) ausgelegt ist, um verschiedene Landmarkenpositionen aus dem terrestrischen Koordinatensystem in das Bild zu projizieren,
- die dem Punkt zugeordnete Landmarkenposition eine Position unter den verschiedenen Landmarkenpositionen ist, deren Projektion in das Bild dem Punkt am nächsten liegt.

5. System (1) nach einem der Ansprüche 3 und 4, wobei das optische Verarbeitungsmodul (8) ausgelegt ist, um:

- eine Übergangsmatrix zu bestimmen, die für eine Koordinatenänderung zwischen dem terrestrischen Koordinatensystem und einem kamerabezogenen Koordinatensystem repräsentativ ist, wobei die Übergangsmatrix eine Größe minimiert, die eine Abweichung zwischen dem Punkt und einer Projektion der zugeordneten Landmarkenposition (A) in das Bild berücksichtigt,
- die Position des Frachtträgers (P) im terrestrischen Koordinatensystem anhand der bestimmten Übergangsmatrix zu berechnen.

6. System (1) nach vorstehendem Anspruch, wobei das optische Verarbeitungsmodul (8) ausgelegt ist, um:

- N Punkte im Bild zu bestimmen, mit $N \geq 4$, wobei jeder Punkt ein Punkt einer im Bild erkannten Landmarkenform ist,
- die N Punkte jeweils N Landemarkenpositionen zuzuordnen, die im terrestrischen Koordinatensystem ausgedrückt sind,
wobei die minimierte Größe eine Summe von N jeweiligen Abweichungen zwischen den N Punkten und den zugeordneten N Projektionen ist.

7. System (1) nach einem der Ansprüche 5 und 6, wobei das Verarbeitungsmodul ausgelegt ist, um:

- einen Anfangswert für die Übergangsmatrix aus einer zuvor geschätzten Lage und zuvor geschätzten Position des Frachtträgers (P) zu berechnen,
- die Übergangsmatrix mit Hilfe eines Optimierungsalgorithmus zu bestimmen, der mit dem Anfangswert initialisiert wurde.

8. System (1) nach einem der vorstehenden Ansprüche, wobei:

- das optische Verarbeitungsmodul (8) zum Schätzen mehrerer zweiter Abstände zwischen dem Frachtträger (P) und mindestens einer Landmarke ausgelegt ist,
- das Modul zur engen Hybridisierung (12) zur Durchführung einer engen Kopplung unter Verwendung des ersten Abstands und jedes zweiten Abstands als Eingabe ausgelegt ist, so dass eine Navigationslösung für den Frachtträger (P) erzeugt wird.

9. System (1) nach einem der Ansprüche 1 bis 8, wobei die externe Einheit eine Bake (B) eines Mobilfunknetzes ist.

10. System (1) nach einem der Ansprüche 1 bis 8, wobei die externe Einheit ein Satellit (S) ist.

11. System (1) nach vorstehendem Anspruch, wobei der zweite Abstand ein Pseudoabstand zwischen dem Frachtträger (P) und dem Satelliten ist.

12. Navigationshilfsverfahren für einen mobilen Frachtträger (P), umfassend die Schritte

- Schätzen (102) eines ersten Abstands zwischen dem Frachtträger (P) und einer zum Frachtträger (P) externen Einheit (B, S) anhand von Daten aus Funksignalen, die von der externen Einheit ausgehen,

- Schätzen (106) eines zweiten Abstands zwischen dem Frachtträger (P) und einer Landmarke (A) anhand von Daten aus Lichtsignalen, die von der Landmarke (A) ausgehen,
- Durchführen (108) einer engen Kopplung unter Verwendung des ersten Abstands und des zweiten Abstands als Eingabe, so dass eine Navigationslösung für den Frachtträger (P) erzeugt wird,

wobei das Verfahren **dadurch gekennzeichnet ist, dass** es einen Schritt umfasst:

- Durchführen (110) einer losen Kopplung unter Verwendung der Trägheitsdaten des Frachtträgers (P) und der Navigationslösung für den Frachtträger (P) als Eingabe, so dass eine sekundäre Navigationslösung für den Frachtträger (P) erzeugt wird.

**Claims**

1.  A navigation aid system (1) for a mobile carrier (P), the system comprising:

    - a signal processing module (4) configured to estimate a first distance between the carrier (P) and an entity external (S, B) to the carrier (P), using data from radio signals emanating from the external entity (S, B),
    - an optical processing module (8) configured to estimate a second distance between the carrier (P) and a landmark (A), using data from light signals emanating from the landmark (A),
    - a tight coupling module (12) configured to implement tight coupling using the first distance and the second distance as inputs, so as to produce a navigation solution for the carrier (P),

    the system being **characterised in that** it comprises:

    - a loose hybridisation module (20) configured to implement loose coupling taking as input inertial data relating to the carrier (P) and the navigation solution for the carrier (P) produced by the tight hybridisation module (12), so as to produce a secondary navigation solution for the carrier (P).

2.  System (1) according to the previous claim, comprising a camera capable of acquiring an image showing the landmark, and in which the optical processing module (8) is configured to estimate the second distance between the carrier (P) and the landmark (A) using the image.

3.  System (1) according to the previous claim, wherein the optical processing module (8) is configured to:

    - recognise a landmark shape in the image, and determine a point in the image of the recognised shape,
    - associate the point with a landmark position expressed in a terrestrial coordinate system,
    - calculate a position of the carrier (P) in the terrestrial reference frame using the point, the bearing position, carrier attitude data and a previous position of the carrier determined earlier,
    - calculate the second distance from the carrier's position (P) and the landmark position.

4.  System (1) according to the preceding claim, wherein:

    - the optical processing module (8) is configured to project different landmarks expressed in the terrestrial coordinate system into the image,
    - the landmark position associated with the point is a position, among the different landmark positions, whose projection in the image is closest to the point.

5.  System (1) according to one of claims 3 and 4, wherein the optical processing module (8) is configured to:

    - determine a transition matrix representative of a change of reference frame between the terrestrial reference frame and a reference frame linked to the camera, the transition matrix minimising a quantity taking into account a deviation between the point and a projection in the image of the associated landmark position (A),
    - calculate the position of the carrier (P) in the terrestrial reference frame from the determined transition matrix.

6.  System (1) according to the previous claim, in which the optical processing module (8) is configured to:

    - determine N points in the image, with N≥4, each point being a point of a landmark shape recognised in the image,

- associate the N points with N beacon positions expressed in the terrestrial coordinate system,

wherein the minimised quantity is a sum of N respective deviations between the N points and the N associated projections.

7. System (1) according to one of claims 5 and 6, wherein the processing module is configured to:

- calculate an initial value for the transition matrix from a previously estimated attitude and position of the carrier (P),
- determine the transition matrix using an optimisation algorithm initialised with the initial value.

8. System (1) according to one of the preceding claims, wherein:

- the optical processing module (8) is configured to estimate a plurality of second distances between the carrier (P) and at least one landmark,
- the tight coupling module (12) is configured to implement tight coupling using the first distance and each second distance as input, so as to produce the navigation solution for the carrier (P).

9. System (1) according to one of claims 1 to 8, wherein the external entity is a beacon (B) of a cellular network.

10. System (1) according to one of claims 1 to 8, wherein the external entity is a satellite (S).

11. System (1) according to the previous claim, wherein the second distance is a pseudo-distance between the carrier (P) and the satellite.

12. Navigation assistance method for a mobile carrier (P), comprising the steps of

- estimating (102) a first distance between the carrier (P) and an external entity (B, S) relative to the carrier (P), using data from radio signals emanating from the external entity,
- estimating (106) a second distance between the carrier (P) and a landmark (A), using data from light signals emanating from the landmark (A),
- implementing (108) a tight coupling using the first distance and the second distance as input, so as to produce a navigation solution for the carrier (P),

the method being **characterised in that** it comprises a step of:

- implementing (110) a loose coupling taking as input inertial data relating to the carrier (P) and the navigation solution of the carrier (P), so as to produce a secondary navigation solution of the carrier (P).

**FIG. 1**

**FIG. 2**

REPÈRE TERRESTRE        REPÈRE LOCAL

**FIG. 3**

**FIG. 4**

FIG. 5

FIG. 6

FIG. 7

FIG. 8

**RÉFÉRENCES CITÉES DANS LA DESCRIPTION**

**Documents brevets cités dans la description**

- EP 2245479 A

- CN 110501736